# EUROPÄISCHE PATENTSCHRIFT

(11) **EP 1 295 733 B1**
(45) Veröffentlichungstag und Bekanntmachung des Hinweises auf die Patenterteilung: **22.06.2005**
(21) Anmeldenummer: 01122870.7
(22) Anmeldetag: 24.09.2001
(51) Int. Cl.: B42D 5/02

(54) **Formblatt, sowie Verfahren zum Herstellen eines Formblattes mit integriertem RFID-Transponder**
Form, and method for the fabrication of a form with an integrated RFID transponder
Formulaire, et méthode pour la fabrication d'un formulaire avec un transpondeur RFID integré

(43) Veröffentlichungstag der Anmeldung: 26.03.2003
(73) Patentinhaber: Gather Formulare, 41189 Mönchengladbach (DE)
(72) Erfinder: Gather, Helmut, 41238 Mönchengladbach (DE)
(74) Vertreter: Dallmeyer, Georg, Dipl.-Ing.

(56) Entgegenhaltungen:
- EP-A- 0 803 379
- DE-A- 19 741 563
- DE-A- 19 854 395

## Beschreibung

Die Erfindung betrifft ein Formblatt nach dem Oberbegriff des Anspruchs 1, sowie ein Verfahren zum Herstellen eines Formblatts mit integriertem RFID-Transponders.

Formblätter mit heraustrennbarem Blattteil sind bekannt. Beispielsweise werden solche herausnehmbaren Blattteile dazu verwendet, Mitgliedsausweise zu erstellen, die aus einem Briefbogen, vorzugsweise einem DIN A4-Briefbogen, herausgetrennt werden können und die automatisch auf einer Druckmaschine hergestellt werden können. Ein besonderer Vorteil ist, dass derartige Briefbögen mit einem individuellen Inhalt, z.B. mit einer kundenspezifischen Anrede und mit kundenspezifischen Daten versehen werden können. Zum Heraustrennen des Blattteils, das häufig Scheckkartenformat hat, ist eine Stanzung vorgesehen, die aus einem ununterbrochenen Schnitt besteht oder einen Schnitt mit Stegen aufweisen kann. Zur Verstärkung des heraustrennbaren Blattteils kann dieses auf seiner Vorder- und Rückseite mit einer Folie verstärkt sein, die auf das Formblatt aufgeklebt ist und die über den Bereich des heraustrennbaren Blattteils hinausgeht. Der Stanzschnitt ist dann durch alle Schichten hindurchgeführt.

Die DE-A-197 41 563 beschreibt ein Formular mit integrierter, herauslösbarer Karte, wobei die Karte ein durch mindestens eine Stanzung im Formular erzeugter Stanzling ist. Die EP-A-803 379 offenbart einen Formularbogen mit einem Grundkörper aus Papier und einer integrierten Scheckkarte, wobei eine Stanzung im Grundkörper die integrierte Scheckkarte seitlich begrenzt.

Es sind ferner RFID-Transponder bekannt, die ein flaches, transparentes Trägermaterial aufweisen, auf dem eine Antenne befestigt ist, sowie ein mit der Antenne verbundener, integrierter Schaltkreis. Ein solcher Transponder ist extrem flach. Ein derartiger RFID-Transponder ist beispielsweise in der DE 109 05 886 A beschrieben. Der Transponder dient in Verbindung mit einer Abfrageeinrichtung als Identifizierungselement, das einen direkten Austausch von Informationen erlaubt, wobei es keines Sichtkontaktes für die Informationsübermittlung zwischen einer Abfrageeinrichtung und dem Transponder bedarf. Der Informationsinhalt im integrierten Schaltkreis des RFID-Transponders kann bei Bedarf geändert werden.

Die integrierten Schaltkreise der bekannten RFID-Transponder weisen eine gewisse Dicke auf, so dass diese, auf Papierbögen aufgebracht, nicht von Weiterverarbeitungsmaschinen nach dem Drucken verarbeitet werden konnten, ohne den integrierten Schaltkreis zu zerstören.

Der Erfindung liegt die Aufgabe zugrunde, ein Formblatt sowie ein Verfahren zur Herstellung eines Formblatts mit integriertem RFID-Transponder zu schaffen, das von einer Weiterverarbeitungsmaschine ohne Zerstörung des in einem Transponder enthaltenen integrierten Schaltkreises verarbeitet werden kann.

Zur Lösung dieser Aufgabe dienen die Merkmale des Anspruchs 1 bzw. 14.

Die Erfindung sieht in vorteilhafter Weise vor, dass das heraustrennbare Blattteil einen RFID-Transponder mit einem integrierten Schaltkreis und einer Antenne trägt, wobei das heraustrennbare Blattteil ein Loch aufweist, in dem der integrierte Schaltkreis angeordnet ist. Der integrierte Schaltkreis kann je nach Dicke des Formblattes vollständig in dem Loch versenkt sein oder nur geringfügig relativ zu dem Formblatt überstehen, so dass das Formblatt auf einer Weiterverarbeitungsmaschine nach dem Drucken unter Ausnutzung der einstellbaren Spaltweiten verarbeitet und bedruckt werden kann. Dadurch, dass der integrierte Schaltkreis in dem Loch versenkt angeordnet ist, wird zuverlässig verhindert, dass eine Beschädigung des RFID-Transponders auftreten kann, auch wenn der integrierte Schaltkreis übersteht, da sich die Dicke des integrierten Schaltkreises nicht mit der Dicke des Formblattes addiert. Es besteht somit die Möglichkeit, das Formblatt individuell mit veränderlichen Informationen, wie beispielsweise Kundendaten, zu bedrucken und auch entsprechende oder zugeordnete elektronische Informationen in dem integrierten Schaltkreis des RFID-Transponders zu speichern. Das heraustrennbare Blattteil kann im Scheckkartenformat vorgestanzt sein, so dass das Blattteil mit dem RFID-Transponders herausgetrennt werden kann. Ein solches Blattteil im Scheckkartenformat kann beispielsweise als Ausweis zur Zugangskontrolle verwendet werden. Das Blattteil ist aber auch geeignet, in Form von Aufklebern oder Etiketten Produkte zu kennzeichnen, z.B. zur Lagerverwaltung, zum Diebstahlschutz oder zur Produktverfolgung während einer Fertigung.

Dadurch, dass es nunmehr möglich ist Formblätter mit integrierten RFID-Transpondern auf Weiterverarbeitungsmaschinen herzustellen, lassen sich derartige heraustrennbaren Blattteile mit integriertem RFID-Transponder äußerst preiswert herstellen.

Der RFID-Transponder kann auf einer Trägerschicht angeordnet sein, die auf der Vorder- oder Rückseite auf dem Blattteil befestigt ist. Dabei kann die Befestigung mit einer Klebeschicht erfolgen.

Der RFID-Transponder ist dabei vorzugsweise zwischen Trägerschicht und dem Blattteil bzw. der Klebeschicht angeordnet.

Auf der Vorder- und/oder Rückseite des Transponders kann eine das heraustrennbare Blattteil überdeckende Schutzschicht angeordnet sein.

Bei einer bevorzugten Ausführungsform ist vorgesehen, dass mindestens eine Schutzschicht und/oder die Trägerschicht des RFID-Transponders aus einer flexiblen, transparenten Folie besteht. Eine derartige flexible Folie kann bereits während der Herstellung des Formblatts aufgebracht werden, und kann ggf. auch bedruckt werden.

Die Trägerschicht und/oder die mindestens eine Schutzschicht sind zumindest teilweise mit dem heraustrennbaren Blattteil verklebt.

Nach einer zweiten Alternative kann die Schutzschicht aus einer unflexiblen Kunststoffschicht bestehen. Eine derartige unflexible Kunststoffschicht kann nach dem Aufbringen des Transponders auf das Blattteil und nach dem Bedrucken des Formblatts aufgebracht werden.

Vorzugsweise ist die transparente oder nicht transparente Trägerschicht für den RFID-Transponder über eine Leimschicht mit dem heraustrennbaren Blattteil verklebt.

Die Schutzschicht aus einer flexiblen Folie ist ebenfalls mit einer Leimschicht auf der Seite des RFID-Transponders mit der Trägerschicht oder dem RFID-Transponder selbst verklebt.

Das Blattteil ist aufgrund einer Trennlinie heraustrennbar, die durch das Blattteil und alle anderen Schichten hindurchgestanzt ist.

Das Formblatt besteht vorzugsweise aus Papier, kann aber auch aus anderem bedruckbaren folienartigen Materialien bestehen.

Auf der Rückseite des Formblattes kann als äußere Schicht eine das Blattteil überdeckende Silikontrennpapierschicht angeordnet sein, die nicht von dem Stanzschnitt für das heraustrennbare Blattteil durchdrungen ist. Auf diese Weise kann auf der Rückseite des heraustrennbaren Blattteils eine Klebeschicht vorgesehen sein, mit deren Hilfe das heraustrennbare Blattteil mit dem integrierten RFID-Transponder als Aufkleber verwendet werden kann.

Bei einem Verfahren zum Herstellen eines Formblattes mit integriertem RFID-Transponder wird zunächst das Formblatt zugeführt und ein Loch in einem später heraustrennbaren Blattteil des Formblattes gestanzt. Anschließend wird der RFID-Transponder mit einer Antenne und einem integrierten Schaltkreis zugeführt und so positioniert, dass der integrierte Schaltkreis in dem Loch des heraustrennbaren Blattteils versenkt angeordnet ist. Dabei wird der RFID-Transponder gleichzeitig, z.B. durch Kleben auf dem heraustrennbaren Blattteil fixiert. Schließlich wird eine Trennlinie für das heraustrennbare Blattteil gestanzt.

Die Vorder- und/oder Rückseite des Formblattes mit dem heraustrennbaren Blattteil kann vor, nach oder während des Stanzens des Lochs mit veränderbaren, z.B. individualisierten Informationen bedruckt werden. Außerdem kann die Vorder- und/oder Rückseite des Formblattes auch nach dem Befestigen des RFID-Transponders auf dem Blattteil oder nach dem Stanzen der Trennlinie für das heraustrennbare Blattteil mit veränderbaren Informationen bedruckt werden. In der Weiterverarbeitungsmaschine wird mit Hilfe eines Tintenstrahl- oder Laserdruckers gedruckt.

Während der Herstellung des Formblatts mit den veränderbaren, individualisierten, gedruckten Informationen können diesen gedruckten Informationen zugeordnete oder entsprechende elektronische Daten in dem integrierten Schaltkreis des RFID-Transponders gespeichert werden.

Zum Stanzen der Trennlinie wird ein Stanzwerkzeug verwendet, das im Bereich des Lochs eine Aussparung aufweist, so dass durch den Stanzvorgang für die Trennlinie eine Beschädigung des integrierten Schaltkreises ausgeschlossen werden kann.

Im folgenden wird unter Bezugnahme auf die Zeichnung ein Ausführungsbeispiel der Erfindung näher erläutert:

Es zeigen:
- Fig. 1: einen Schnitt durch das Formblatt entlang der Linie I-I in Fig. 2,
- Fig. 2: eine Draufsicht auf die Rückseite des Formblatts,
- Fig. 3: eine Ansicht der Vorderseite des Formblatts, und
- Fig. 4: eine vergrößerte Darstellung des Querschnitts des Formblatts gemäß dem Detail IV in Fig. 1.

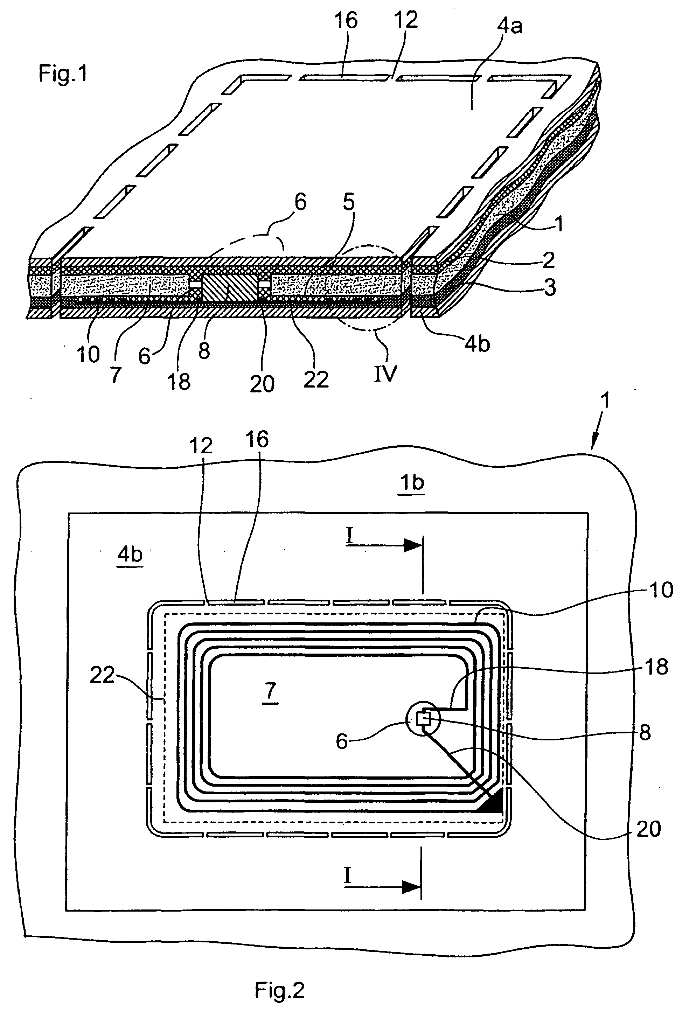

Das Formblatt 1 besteht beispielsweise aus einem Druckpapierbogen oder Endlospapierbogen mit einer Vorderseite 1a und einer Rückseite 1b, wie er beispielsweise im DIN A4-Format oder in anderen Formaten für Drucksachen benötigt wird. Das Formblatt 1 weist einen heraustrennbaren Bereich 7 auf, der mit Hilfe einer Trennlinie 16, die von Stegen 12 unterbrochen sein kann oder kontinuierlich verläuft, herausgetrennt werden kann. Im dargestellten Ausführungsbeispiel der Fign. 1 bis 4 ist die Stanzlinie durchgängig durch alle dargestellte Schichten. Sie kann aber auch nicht durchgängig sein, wenn beispielsweise auf der Rückseite 1b des Formblatts 1 als äußere Schicht eine Silikontrennpapierschicht angeordnet ist.

Wie aus Fig. 2 ersichtlich, ist auf der Rückseite 1b des Formblattes 1 auf dem heraustrennbaren Blattteil 7 ein RFID-Transponder mit einer Antenne 10 und einem integrierten Schaltkreis 8 angeordnet. Der RFID-Transponder wird von einer Trägerfolie 22 getragen, die mit Hilfe einer Leimschicht 5 auf das heraustrennbare Blattteil 7 aufgeklebt ist. Die Trägerfolie 22 kann selbstverständlich auch aus nichttransparenten Material bestehen. Desweiteren kann die Trägerfolie 22 bedruckbar sein.

Sowohl auf der Vorderseite 1a wie auch auf der Rückseite 1b kann eine Schutzschicht 4a bzw. 4b vorgesehen sein, die den heraustrennbaren Bereich 7 überdeckt. Diese Schutzschicht 4a,4b besteht ebenfalls vorzugsweise aus einer flexiblen transparenten Folie, weshalb beispielsweise bei der Darstellung gemäß Fig. 2 der RFID-Transponder sichtbar ist.

Selbstverständlich kann auch die Schutzschicht 4a,4b aus einem nichttransparenten und ggf. bedruckbarem Material bestehen.

In Fig. 2 sind die Schutzschicht 4b und eine Trägerschicht 22 des RFID-Transponders transparent, so dass die Antenne 10 und der integrierte Schaltkreis 8 des RFID-Transponders sichtbar sind. In dem Ausführungsbeispiel sind die Antenne 10 und der integrierte Schaltkreis auf der der Rückseite 1b des Formblattes 1 zugewandten Seite der flexiblen transparenten Trägerschicht 22 befestigt. Die Antenne 10 ist über zwei Anschlussleitungen 18,20 an den integrierten Schaltkreis 8 angeschlossen. Der integrierte Schaltkreis 8 ist dabei auf dem heraustrennbaren Blattteil 7 des Formblattes 1 im Bereich eines Lochs 6 versenkt angeordnet, wie am besten aus Fig. 1 hervorgeht.

In Fig. 1 ist der Schichtaufbau des heraustrennbaren Blattteils 7 im einzelnen dargestellt. Von der Rückseite des Formblattes gesehen ergibt sich folgender Schichtaufbau: Die rückseitige Schutzschicht 4b ist über eine Leimschicht 3, die separat aufgetragen sein kann oder sich auf der dem Formblatt 1 zugewandten Seite der Schutzschicht 4b befindet, mit der Rückseite 1b des Formblattes bzw. innerhalb des Bereiches des heraustrennbaren Blattteils 7 mit der Rückseite der Trägerschicht 22 für den RFID-Transponder bzw. mit der Rückseite 1b des Formblattes 1 verbunden. Die Trägerschicht 22, die vorzugsweise aus einer flexiblen transparenten Folie besteht, kann ihrerseits mit einer Leimschicht 5 auf der dem Formblatt 1 zugewandten Seite versehen sein oder mit Hilfe einer separat aufgetragenen Leimschicht 5 mit der Rückseite des heraustrennbaren Blattteils 7 verklebt sein. Die Leimschicht 5 überdeckt dabei die Antenne 10, die auf der Trägerschicht 22, z.B. durch Verschweißen, fest verbunden ist. Ein Teil der Leimschicht 5 dringt beim Aufkleben des RFID-Transponders in das Loch 6 im heraustrennbaren Blattteil ein. Der integrierte Schaltkreis 8 ist in dem Loch 6 versenkt angeordnet, so dass er zur vorderen Seite des Formblattes nicht oder nur geringfügig übersteht. Auf der Vorderseite 1a des Formblattes 1 ist wiederum eine Schutzschicht 4a, vorzugsweise aus einer flexiblen, transparenten Folie, vorgesehen, die über eine Leimschicht 2 mit dem Formblatt 1 bzw. mit dem heraustrennbaren Blattteil 7 des Formblattes 1 verbunden ist.

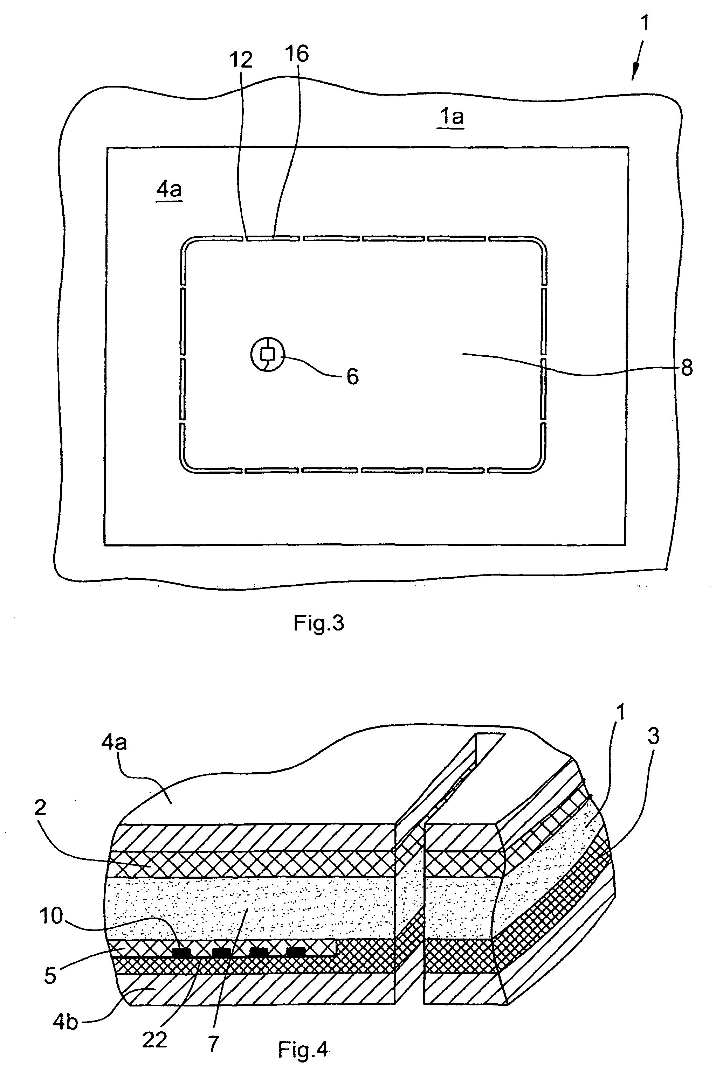

Eine vergrößerte Darstellung des Schichtaufbaus ist in Fig. 4 wiedergegeben.

Fig. 3 zeigt die Vorderseite 1a des Formblatts 1 im Bereich des heraustrennbaren Blattteil 7. Selbstverständlich können anstelle der Schutzschichten 4a,4b auch andere oder zusätzliche Schichten vorgesehen sein, wie beispielsweise eine Silikontrennpapierschicht, die nicht von dem Stanzschnitt für das heraustrennbare Blattteil durchdrungen wird, und mit deren Hilfe es möglich ist, das heraustrennbare Blattteil 7 mit Hilfe der Leimschicht 3 als Etikett auf eine gewünschte Stelle eines Gegenstandes aufzukleben.

Das Stanzwerkzeug zur Herstellung der Trennlinie 16 weist im Bereich des ausgestanzten Loches 6 eine dem Loch entsprechende Aussparung auf, so dass bei dem Stanzschnitt der integrierte Schaltkreis 8 nicht beschädigt werden kann. Die Trennlinie 16 kann kontinuierlich sein oder von Stegen 12 unterbrochen sein, wie in dem Ausführungsbeispiel der Fign. 1 bis 4 dargestellt.

Anstelle der Schutzschichten 4a,4b und den entsprechenden Leimschichten 2 und 3 kann auch auf der Vorder- und Rückseite nach dem Bedrucken des Formblattes 1 und nach dem Aufbringen des RFID-Transponders eine unflexible Kunststoffschicht auf mindestens eine Seite des Formblatts 1 aufgetragen werden. Auf diese Weise kann das heraustrennbare Blattteil 7 mit einer Steifigkeit versehen werden, wie sie von derzeitigen Kreditkarten bekannt ist.

Das heraustrennbare Blattteil 7 weist vorzugsweise das übliche Scheckkartenformat auf.

Die Herstellung des Formblattes mit integriertem RFID-Transponder erfolgt in folgender Weise:

Zunächst wird ein gegebenenfalls bereits bedruckter Bogen oder ein Endlosformular einer Weiterverarbeitungsmaschine zugeführt, wobei an einer geeigneten Stelle innerhalb eines später heraustrennbaren Blattteils 7 ein Loch 6 gestanzt wird. Dabei kann gleichzeitig ein nachträgliches Bedrucken der Vorder- und/oder Rückseite 1a,1b des Formblatts 1 mit einem berührungslosen Drucker erfolgen. In einem zweiten Schritt wird der RFID-Transponder auf einer Trägerschicht 22 beispielsweise von einer Rolle zugeführt, die selbstklebend (Leimschicht 5) beschichtet sein kann. In diesem Verfahrensschritt kann auch die Funktionsfähigkeit des RFID-Transponders geprüft werden, so dass fehlerhafte RFID-Transponder ausgegliedert werden und somit nur technisch einwandfreie RFID-Transponder auf die Vorder- oder Rückseite 1a,1b des Formblattes 1 auf das heraustrennbare Blattteil 7 aufgeklebt werden.

Dabei wird der RFID-Transponder so positioniert, dass der integrierte Schaltkreis 8 in dem Loch 6 des heraustrennbaren Blattteils 7 des Formblatts 1 versenkt angeordnet werden kann.

Die RFID-Transponder befinden sich auf einem Papierträger, der zu einer Rolle aufgewickelt ist. Beispielsweise können die RFID-Transponder quer zur Transportrichtung des Formblatts 1 zugeführt werden, wobei zunächst ein Silikontrennpapier entfernt wird und die einzelnen RFID-Transponder durch einen Schnitt mit einem Messer vereinzelt werden und in gewünschter Weise auf dem Formblatt 1 positioniert werden. Selbstverständlich ist auch eine Zufuhr der RFID-Transponder in Transportrichtung des Formblattes 1 möglich, wenn die RFID-Transponder entsprechend auf der Trägerrolle positioniert sind.

Auch nach dem Aufbringen des RFID-Transponders besteht noch die Möglichkeit, das Formblatt 1 auf seiner Vorder- und/oder Rückseite 1a,1b oder die Trägerfolie 22 auf ihrer äußeren Seite zu bedrucken.

In einem weiteren Schritt kann auf der Vorder- und/oder Rückseite 1a,1b eine zumindest das heraustrennbare Blattteil überdeckende Schutzschicht 4a,4b mit Hilfe einer Leimschicht 2,3 aufgetragen werden.

In einem optionalen weiteren Schritt kann schließlich noch eine weitere Papierschicht aufgeleimt werden.

Nach dem Auftragen aller Schichten erfolgt eine Stanzung des heraustrennbaren Blattteils 7 in einem gewünschten Format, z.B. im Scheckkartenformat.

In einem weiteren Schritt kann der RFID-Transponder erneut auf Funktionsfähigkeit überprüft werden.

Selbstverständlich können beim nachträglichen Bedrucken des Formblattes 1 durch einen berührungslosen Tintenstrahl- oder Laserdrucker bereits individualisierte Informationen und Daten aufgedruckt werden und gleichzeitig korrespondierende oder zugeordnete elektronische Daten in dem integrierten Schaltkreis 8 gespeichert werden.

Alternativ können aufgedrückte individualisierte Daten dazu verwendet werden, die in dem integrierten Schaltkreis 8 zu speichernden Daten aus einem Rechnerspeicher auszulesen und in dem RFID-Transponder zu speichern.

Nach einer weiteren Alternative besteht die Möglichkeit, bereits zuvor in dem integrierten Schaltkreis 8 gespeicherte Daten auszulesen, um das Formblatt 1 nachträglich mit individualisierten Informationen und Daten zu bedrucken.

## Patentansprüche

1. Formblatt (1) mit Vorder- und Rückseite (1a,1b) und einem heraustrennbaren Blattteil (7), wobei das Formblatt (1) zumindest einseitig bedruckbar ist,
**dadurch gekennzeichnet,**
**dass** das heraustrennbare Blattteil (7) einen RFID-Transponder mit einem integrierten Schaltkreis (8) und einer Antenne (10) trägt, und
**dass** das heraustrennbare Blattteil (7) ein Loch (6) aufweist, in dem der integrierte Schaltkreis (8) angeordnet ist.

2. Formblatt nach Anspruch 1, **dadurch gekennzeichnet, dass** der RFID-Transponder auf einer Trägerschicht (22) angeordnet ist, die auf der Vorder- oder Rückseite (1a,1b) auf dem Blattteil (7) befestigt ist.

3. Formblatt nach Anspruch 2, **dadurch gekennzeichnet, dass** der RFID-Transponder zwischen Trägerschicht (22) und dem Blattteil (7) angeordnet ist.

4. Formblatt nach einem der Ansprüche 1 bis 3, **dadurch gekennzeichnet, dass** auf der Vorder- und/oder Rückseite (1a,1b) des Formblatts (1) eine das heraustrennbare Blattteil überdeckende Schutzschicht (4a,4b) angeordnet ist.

5. Formblatt nach Anspruch 4, **dadurch gekennzeichnet, dass** die Schutzschicht (4a,4b) aus einer unflexiblen Kunststoffschicht besteht.

6. Formblatt nach Anspruch 4, **dadurch gekennzeichnet, dass** mindestens eine Schutzschicht (4a,4b) und/oder die Trägerschicht (22) des RFID-Transponders aus einer flexiblen, transparenten Folie besteht.

7. Formblatt nach einem der Ansprüche 2 bis 6, **dadurch gekennzeichnet, dass** die Trägerschicht (22) und/oder die mindestens eine Schutzschicht (4a,4b) zumindest teilweise mit dem heraustrennbaren Blattteil (7) verklebt sind.

8. Formblatt nach einem der Ansprüche 2 bis 7, **dadurch gekennzeichnet, dass** die transparente oder nicht transparente Trägerschicht (22) für den RFID-Transponder über eine Leimschicht (5) mit dem heraustrennbaren Blattteil (7) verklebt ist.

9. Formblatt nach einem der Ansprüche 6 bis 8, **dadurch gekennzeichnet, dass** die Schutzschicht (4a,4b) über eine Leimschicht (2,3) mit dem heraustrennbaren Blattteil (7), bzw. mit der Trägerschicht (22) oder dem RFID-Transponder verklebt ist.

10. Formblatt nach einem der Ansprüche 1 bis 9, **dadurch gekennzeichnet, dass** das Blattteil (7) aufgrund einer Trennlinie (16) heraustrennbar ist, die durch das Blattteil (7) und alle anderen Schichten hindurchgestanzt ist.

11. Formblatt nach Anspruch 10, **dadurch gekennzeichnet, dass** die Trennlinie (16) von Stegen (12), die das Formblatt (1) mit dem heraustrennbaren Blattteil (7) verbinden, unterbrochen ist.

12. Formblatt nach einem der Ansprüche 1 bis 10, **dadurch gekennzeichnet, dass** das Formblatt (1) aus Papier besteht.

13. Formblatt nach einem der Ansprüche 1 bis 12, **dadurch gekennzeichnet, dass** auf der Rückseite (1b) des Formblattes (1) als äußere Schicht eine das Blattteil (7) überdeckende Silikontrennpapierschicht angeordnet ist, die nicht von dem Stanzschnitt für das heraustrennbare Blattteil (7) durchdrungen ist.

14. Verfahren zum Herstellen eines mit einem RFID-Transponders versehenen Formblattes (1) mit Vorder- und Rückseite (1a,1b),
- durch Zuführen des Formblattes (1),
- durch Stanzen eines Lochs (6) in einem heraustrennbaren Blattteil (7) des Formblattes (1),
- durch Zuführen des RFID-Transponders mit einer Antenne (10) und einem integrierten Schaltkreis (8),
- durch Positionieren des integrierten Schaltkreises (8) in dem Loch (6) des heraustrennbaren Blattteils (7),
- durch Fixieren des RFID-Transponders auf dem heraustrennbaren Blattteil (7), und
- durch Stanzen einer Trennlinie (16) für das heraustrennbare Blattteil (7).

15. Verfahren nach Anspruch 14, **dadurch gekennzeichnet, dass** die Vorder- und/oder Rückseite (1a,1b) das Formblattes (1) mit dem heraustrennbaren Blattteil (7) vor, nach oder während des Stanzens des Lochs (6) mit veränderbaren Informationen bedruckt wird.

16. Verfahren nach Anspruch 14 oder 15, **dadurch gekennzeichnet, dass** mehrere RFID-Transponder auf einer Trägerschicht (22) fortlaufend oder intermittierend zugeführt werden und durch einen Schnitt vereinzelt auf dem heraustrennbaren Blattteil (7) des Formblattes (1) mit der Trägerschicht (22) fixiert werden.

17. Verfahren nach einem der Ansprüche 14 bis 16, **dadurch gekennzeichnet, dass** die Vorder- und/oder Rückseite (1a,1b) des Formblatts (1) mit dem heraustrennbaren Blattteil (7) nach dem Befestigen des RFID-Transponders auf dem Blattteil (7) oder nach dem Stanzen der Trennlinie (16) für das heraustrennbare Blattteil (7) mit veränderbaren Informationen bedruckt wird.

18. Verfahren nach einem der Ansprüche 14 bis 17, **dadurch gekennzeichnet, dass** zum Stanzen der Trennlinie (12) ein Stanzwerkzeug verwendet wird, das im Bereich des Lochs (6) eine Aussparung aufweist.

19. Verfahren nach einem der Ansprüche 15 bis 18, **dadurch gekennzeichnet, dass** individuelle, z.B. kundenspezifische Druckinformationen und Daten auf das Formblatt (1) nachträglich durch einen Tintenstrahl- oder Laserdrucker aufgedruckt werden und dass diesen Druckinformationen und Daten zugeordnete elektronische Daten in dem integrierten Schaltkreis (8) gespeichert werden.

20. Verfahren nach einem der Ansprüche 15 bis 18, **dadurch gekennzeichnet, dass** bereits auf dem Formblatt (1) aufgedruckte individuelle Druckinformationen und Daten dazu verwendet werden, um diesen zugeordnete elektronische Daten aus einem Rechnerspeicher auszulesen in dem integrierten Schaltkreis (8) auf dem Formblatt (1) zu speichern.

21. Verfahren nach einem der Ansprüche 15 bis 18, **dadurch gekennzeichnet, dass** bereits zuvor in dem RFID-Transponder gespeicherte Daten ausgelesen werden, um diesen zugeordnete individuelle Druckinformationen und Daten auf das Formblatt (1) nachträglich aufzudrucken.

## Claims

1. Form (1) with a front and a rear side (1a, 1b) and a detachable sheet member (7), said form (1) being printable on at least one side,
**characterized in that**
the detachable sheet member (7) bears a RFID transponder with an integrated circuit (8) and an antenna (10), and
the detachable sheet member (7) has a hole (6) in which the integrated circuit (8) is arranged.

2. Form of claim 1, wherein the RFID transponder is arranged on a carrier layer (22) attached to the front or the rear side (1a, 1b) of the sheet member (7).

3. Form of claim 2, wherein the RFID transponder is arranged between the carrier layer (22) and the sheet member (7).

4. Form of one of claims 1 to 3, wherein a protective layer (4a, 4b) covering the detachable sheet member (7) is provided on the front and/or the rear side (1a, 1b) of the form (1).

5. Form of claim 4, wherein the protective layer (4a, 4b) is a non-flexible plastics layer.

6. Form of claim 4, wherein at least one protective layer (4a, 4b) and/or the carrier layer (22) of the RFID transponder is a flexible transparent film.

7. Form of one of claims 2 to 6, wherein the carrier layer (22) and/or the at least one protective layer (4a, 4b) are at least partly glued to the detachable sheet member (7).

8. Form of one of claims 2 to 7, wherein the transparent or non-transparent carrier layer (22) for the RFID transponder is glued to the detachable sheet member (7) through a glue layer (5).

9. Form of one of claims 6 to 8, wherein the protective layer (4a, 4b) is glued to the detachable sheet member (7) or the carrier layer (22) or the RFID transponder through a glue layer (2, 3).

10. Form of one of claims 1 to 9, wherein the sheet member (7) is detachable because of a parting line (16) punched through the sheet member (7) and all other layers.

11. Form of claim 10, wherein the parting line (16) is interrupted by lands (12) that connect the form (1) to the detachable sheet member (7).

12. Form of one of claims 1 to 10, wherein the form (1) is made of paper.

13. Form of one of claims 1 to 12, wherein the rear side (1b) of the form (1) is provided with a silicone liner layer covering the sheet member (7) as the outer layer, the silicone liner layer not being penetrated by the punching of the detachable sheet member (7).

14. Method for manufacturing a form (1) having a front and a rear side (1a, 1b) and being provided with a RFID transponder (22),
- by feeding the form (1),
- by punching a hole (6) in a detachable sheet member (7) of the form (1),
- by supplying the RFID transponder comprising an antenna (10) and an integrated circuit (8),
- by positioning the integrated circuit (8) in the hole (6) of the detachable sheet member (7),
- by fixing the RFID transponder on the detachable sheet member (7), and
- by punching a parting line (16) for the detachable sheet member (7).

15. Method of claim 14, wherein the front and/or the rear side (1a, 1b) of the form (1) with the detachable sheet member (7) is printed with variable information before, after or during the punching of the hole (6).

16. Method of claim 14 or 15, wherein a plurality of RFID transponders on a carrier layer (22) are supplied continuously or intermittently and are individualized by a cut and fixed on the detachable sheet member (7) of the form (1) with the carrier layer (22).

17. Method of one of claims 14 to 16, wherein the front and/or rear side (1a, 1b) of the form (1) with the detachable sheet member (7) is printed with variable information after fixing the RFID transponder on the sheet member (7) or after punching the parting line (16) for the detachable sheet member (7).

18. Method of one of claims 14 to 17, wherein a punching tool is used to punch the parting line (12), which has a recess in the area of the hole (6).

19. Method of one of claims 15 to 18, wherein individual, e.g. customer specific print information and data, are posteriorly printed on the form (1) using an ink jet or a laser printer, and wherein electronic data associated with this print information and data are stored in the integrated circuit (8).

20. Method of one of claims 15 to 18, wherein individual print information already printed on the form (1) is used to read associated electronic data from a computer memory and to store them in the integrated circuit (8) on the form (1).

21. Method of one of claims 15 to 18, wherein data previously stored in the RFID transponder are read out to posteriorly print associated individual print information and data on the form (1).

## Revendications

1. Formulaire (1) comportant un recto et un verso (1a, 1b) et une partie de formulaire séparable (7), le formulaire (1) pouvant être imprimé au moins sur un côté, **caractérisé en ce que**
la partie de formulaire séparable (16) supporte un transpondeur RFID comportant un circuit intégré (8) et une antenne (10), et
**en ce que** la partie de formulaire séparable (16) comporte un trou (6) dans lequel est placé le circuit intégré (8).

2. Formulaire selon la revendication 1, **caractérisé en ce que** le transpondeur RFID est disposé sur une couche de support (22) qui est fixée au recto ou au verso (1a, 1b) sur la partie de formulaire (16).

3. Formulaire selon la revendication 2, **caractérisé en ce que** le transpondeur RFID est disposé entre la couche de support (22) et la partie de formulaire (7).

4. Formulaire selon l'une des revendications 1 à 3, **caractérisé en ce qu'**une couche de protection (4a, 4b) recouvrant la partie de formulaire séparable est disposée au recto et/ou au verso (1a, 1b) du formulaire (1).

5. Formulaire selon la revendication 4, **caractérisé en ce que** la couche de protection (4a, 4b) est constituée d'une couche de matière plastique non flexible.

6. Formulaire selon la revendication 4, **caractérisé en ce qu'**au moins une couche de protection (4a, 4b) et/ou la couche de support (22) du transpondeur RFID sont constituées d'une feuille transparente, flexible.

7. Formulaire selon l'une des revendications 2 à 6, **caractérisé en ce que** la couche de support (22) et/ou l'au moins une couche de protection (4a, 4b) est collée au moins partiellement à la partie de formulaire séparable (7).

8. Formulaire selon l'une des revendications 2 à 7, **caractérisé en ce que** la couche de support transparente ou non transparente (22) destinée au transpondeur RFID est collée au moyen d'une couche de colle (5) à la partie de formulaire séparable (16).

9. Formulaire selon l'une des revendications 6 à 8, **caractérisé en ce que** la couche de protection (4a, 4b) est collée au moyen d'une couche de colle (2, 3) à la partie de formulaire séparable (7), ou à la couche de support (22) ou au transpondeur RFID.

10. Formulaire selon l'une des revendications 1 à 9, **caractérisé en ce que** la partie de formulaire (7) est séparable grâce à une ligne de séparation (16), qui est poinçonnée à travers la partie de formulaire (7) et toutes les autres couches.

11. Formulaire selon la revendication 10, **caractérisé en ce que** la ligne de séparation (16) est interrompue par des traverses (12) qui relient le formulaire (1) à la partie de formulaire séparable (7).

12. Formulaire selon l'une des revendications 1 à 10, **caractérisé en ce que** le formulaire (1) est en papier.

13. Formulaire selon l'une des revendications 1 à 12, **caractérisé en ce qu'**une couche de papier de séparation siliconée, recouvrant la partie de formulaire (7), est placée au verso (1b) du formulaire (1) en tant que couche extérieure et n'est pas traversée par la découpe de poinçonnage pour la partie de formulaires séparable (7).

14. Procédé d'élaboration d'un formulaire (1) doté d'un transpondeur RFID et comportant un recto et un verso (1a, 1b), consistant à
- amener le formulaire (1),
- poinçonner un trou (6) dans une partie de formulaire séparable (7) du formulaire (1),
- amener le transpondeur RFID doté d'une antenne (10) et d'un circuit intégré (8),
- positionner le circuit intégré (8) dans le trou (6) de la partie de formulaire séparable (7),
- fixer le transpondeur sur la partie de formulaire séparable (7), et
- poinçonner une ligne de séparation (16), pour la partie de formulaire séparable (16).

15. Procédé selon la revendication 14, **caractérisé en ce que** le recto et/ou le verso (1a, 1b) du formulaire (1) avec la partie de formulaire séparable (7) sont imprimés avec des informations modifiables avant, après ou pendant le poinçonnage du trou (6).

16. Procédé selon la revendication 14 ou 15, **caractérisé en ce que** plusieurs transpondeurs RFID sont amenés sur une couche de support (22) de façon continue ou discontinue et sont fixés sur la partie de formulaire séparable (7) du formulaire (1) dotée de la couche de support (22) en étant isolés par une rainure.

17. Procédé selon l'une des revendications 14 à 16, **caractérisé en ce que** le recto et/ou le verso (1a, 1b) du formulaire (1) doté de la partie de formulaire séparable (7) sont imprimés avec des informations modifiables après la fixation du transpondeur RFID sur la partie de formulaire (7) ou après le poinçonnage de la ligne de séparation (16) pour la partie de formulaire séparable (16).

18. Procédé selon l'une des revendications 14 à 17, **caractérisé en ce que** l'on utilise pour le poinçonnage de la ligne de séparation (22) un outil de découpe qui comporte un évidement au niveau du trou (6).

19. Procédé selon l'une des revendications 15 à 18, **caractérisé en ce que** des données et des informations d'impression individuelles, par exemple spécifiques à un client, sont imprimées ultérieurement sur le formulaire (1) par une imprimante à jet d'encre ou laser et **en ce que** des données électroniques associées à ces données et informations d'impression sont mémorisées dans le circuit intégré (8).

20. Procédé selon l'une des revendications 15 à 18, **caractérisé en ce que** des données et des informations d'impression individuelles, déjà imprimées sur le formulaire (1), sont utilisées pour lire, dans une mémoire d'ordinateur, des données électroniques associées à celles-ci et pour les mémoriser dans le circuit intégré (8) sur le formulaire (1).

21. Procédé selon l'une des revendications 15 à 18, **caractérisé en ce que** des données déjà mémorisées dans le transpondeur RFID sont lues pour imprimer ultérieurement, sur le formulaire (1), des données et informations d'impressions individuelles associées à celles-ci.
